# EUROPÄISCHE PATENTSCHRIFT

(11) **EP 1 252 491 B1**
(45) Veröffentlichungstag und Bekanntmachung des Hinweises auf die Patenterteilung: **23.02.2005**
(21) Anmeldenummer: 00989782.8
(22) Anmeldetag: 22.11.2000
(51) Int. Cl.: G01L 5/22, G01L 3/10

(54) **SENSORANORDNUNG ZUR ERFASSUNG EINES DREHWINKELS UND/ODER EINES DREHMOMENTS**
SENSOR SYSTEM FOR DETECTING AN ANGLE OF ROTATION AND/OR A TORQUE
DISPOSITIF DE MESURE DESTINE A LA DETECTION D'UN ANGLE ET/OU D'UN COUPLE DE ROTATION

(30) Priorität: 04.12.1999 DE 19958504
(43) Veröffentlichungstag der Anmeldung: 30.10.2002
(73) Patentinhaber: ROBERT BOSCH GMBH, 70442 Stuttgart (DE)
(72) Erfinder: NOLTEMEYER, Ralf, 73249 Wernau (DE)
(86) Internationale Anmeldenummer: PCT/DE2000/004117
(87) Internationale Veröffentlichungsnummer: WO 2001/040750

(56) Entgegenhaltungen:
- US-A- 4 972 725
- US-A- 5 501 110

## Beschreibung

### Stand der Technik

Die Erfindung betrifft eine Sensoranordnung zur Erfassung eines Drehwinkels und/oder eines Drehmoments, insbesondere an Achsen oder Wellen, nach dem Oberbegriff des Hauptanspruchs.

Es ist bereits aus der US-PS 5,501,110 eine Sensoranordnung bekannt, bei der das auf eine Achse übertragene Drehmoment erfasst werden soll. Das Drehmoment wird aus der Torsion bzw. dem Drehwinkelversatz der Achsenden und einer Elastizitäts-Konstante, die vom Material und der Geometrie der Achse abhängt, bestimmt. Es sind hierbei zwei Magnete und jeweils ein den Magneten gegenüberliegender Hall-Sensor exzentrisch auf dem äußeren Umfang von zwei sich jeweils mit der Achse drehenden Scheiben angebracht.

Beispielsweise zur Erfassung des auf eine Lenkradachse eines Kraftfahrzeuges wirkenden Drehmomentes während der Drehung des Lenkrades müssen sehr kleine Winkeländerungen in beiden Drehrichtungen des Lenkrades gemessen werden. Das Drehmoment in der rotierenden Lenkradspindel ist eine Schlüsselgröße für viele Regelungsund Steuerungsaufgaben im Kraftfahrzeug und kann im Prinzip auf verschiedene, für sich gesehen bekannte Arten erfasst werden. Beispielsweise kann dies auch mit einer Sensoranordnung nach dem Wirbelstromprinzip oder mit einer optischen Anordnung, bestehend aus einer Strichscheibe und einem CCD-Chip, aufgebaut sein.

Bei Sensoranordnungen nach dem eingangs genannten, aus dem Stand der Technik bekannten Prinzip besteht vor allem die Gefahr, dass durch eine Umlaufmodulation, die durch Toleranzproblemen bei der Anordnung der Pole der Magneten entstehen, relativ große Messfehler auftreten können. Weiterhin kann auch bei der Signalerfassung an rotierenden Wellen die Signalübertragung schwierig werden, die zwar je nach Anwendung mit einem Drehübertrager oder mit Schleifringen gelöst werden kann, jedoch kostenintensiv und störanfällig ist.

### Vorteile der Erfindung

Die eingangs erwähnte gattungsgemäße Sensoranordnung zur Erfassung des Drehwinkels- und/oder des Drehmoments an rotierenden mechanischen Bauteilen, ist gemäß des Kennzeichens des Anspruchs 1 in vorteilhafter Weise dadurch weitergebildet, dass am rotierenden Bauteil eine Torsionswelle als Außenwelle gebildet ist an deren einem Ende ein Drehmoment angreift. Im Bereich des stirnseitigen anderen Endes der Außenwelle ist dann das Drehmoment abnehmbar, wobei eine Innenwelle konzentrisch zur Außenwelle liegt, die mit ihrem einen Ende an der Außenwelle im Bereich des Eingangs des Drehmoments befestigt ist. An den stirnseitigen Ende der Außenwelle und der Innenwelle liegen gemäß der Erfindung in vorteilhafter Weise Signalerzeugungselemente denen jeweils ein ortsfestes Detektionselement zugeordnet ist.

Bei einer bevorzugten Ausführungsform ist ein Magnet als Signalerzeugungselement an der Innenwelle zur Erfassung des Drehwinkels am Eingang des Drehmoments angeordnet und erzeugt ein zur Wellenachse liegendes radiales Magnetfeld. Ein weiterer Magnet als Signalerzeugungselement an der Außenwelle ist dabei in vorteilhafter Weise zur Erfassung des Drehwinkels des Ausgangs des Drehmoments konzentrisch zur Innenwelle außerhalb des einen Magneten angeordnet. Hierdurch wird ein weiteres radiales Magnetfeld erzeugt, so dass nunmehr durch die Einwirkung des Drehmomentes die Verdrehung der Magnetfelder relativ zueinander messbar ist, wobei der Verdrehwinkel proportional zum Drehmoment ist.

Auf einfache Weise können die Detektionselemente bzw. Sensoren magnetoresistive Sensoren sein, beispielsweise sogenannte AMR- oder GMR-Sensoren (AMR = Anisotropmagnetoresistiv, GMR = Giant-magnetoresistiv) sein, die ein im wesentlichen von der Feldlinienrichtung der mit den drehbaren Wellen verbundenen Magnete abhängiges Signal abgeben und derart im Magnetfeld der Magneten angeordnet ist, dass deren magnetfeldempfindliche Schicht tangential zu der die Winkeländerung verursachenden Drehung der Wellen liegt.

In einer vorteilhaften Auswerteschaltung können aus diesen Signalen jeweils der absolute Drehwinkel der Innen- und der Außenwelle und, wie oben erwähnt, aus dem relativen Verdrehwinkel das einwirkende Drehmoment ermittelt werden. Eine besonders vorteilhafte Anwendung der Erfindung ergibt sich, wenn die Innen- und die Außenwelle an der Lenkspindel eines Kraftfahrzeuges angebracht sind.

Weiterhin ist es vorteilhaft, wenn am stirnseitigen Ende der Außenwelle ein Antrieb für ein weiteres rotierendes Bauteil exzentrisch oder konzentrisch zur Wellenachse angebracht ist. Hiermit können auf einfache weise auch Umdrehungen der Außenwelle, bzw. der Lenkspindel, größer als 360° erfasst und ausgewertet werden, wobei die Erfassung der Drehung des weiteren Körpers ebenfalls mit einer magnetfeldempfindlichen Sensoranordnung vornehmbar ist. Der erforderliche Antrieb kann vorteilhaft ein Zahnradantrieb sein, bei dem die Zähnezahl auf dem Umfang des weiteren Körpers unterschiedlich zur Zähnezahl auf der Außenwelle ist und damit ein eindeutiges Signal für eine volle Umdrehung zur Verfügung steht.

Zusammenfassend ergeben sich eine Reihe von Vorteilen für die erfindungsgemäße Sensoranordnung mit einer konzentrische Winkelmessung an den Wellen insbesondere durch die Plazierung der Magnetmittelpunkte und der Sensorelemente auf der Wellenachse. Mit den beiden Messungen der jeweiligen Magnetfeldrichtungen ist auf einfache Weise eine Fehlerüberwachung des Winkels des rotierenden Bauteils, z.B. eines Lenkrades aufgrund eines Vergleichs der beiden Magnetfeldrichtungsmessungen möglich.

Auch ist bei einer Anwendung im Kraftfahrzeug die Auswerteelektronik in einem kompakten Gehäuse einfach modular aufbaubar, da insbesondere eine kontaktfreie Messung von Drehmoment und Lenkradwinkel (> 360°) ohne zusätzliches Reibmoment möglich ist. Es kann hier somit ein gekapseltes Gehäuse aufgebaut werden, das feuchtigkeitsunempfindlich ist und einen einfachen Austausch des Sensorgehäuses mitsamt der Elektronik möglich macht.

Die mit der erfindungsgemäßen Sensoranordnung durchführbare Winkelmessung kann dabei mit einer Vielzahl von, vorzugsweise berührungslosen, Messverfahren durchgeführt werden und ist nicht auf Magnetfeldrichtungsmessung beschränkt. Die Messung kann an vielen rotierenden Bauteilen durchgeführt werden, z.B. bei einer Anwendung im Kraftfahrzeug auch am Lenkgetriebe am Lenkrad im Fahrerraum, am Differential oder an einer Motorwelle, beispielsweise zur Ausgabe des Lenkradwinkels, des Radwinkels, der Winkelgeschwindigkeit, der Winkelbeschleunigung und des Drehmoments.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ausführungsbeispiele der erfindungsgemäßen Sensoranordnung werden anhand der Zeichnung erläutert. Es zeigen:
Figur 1 einen Schnitt durch ein Lenkgetriebe für ein Kraftfahrzeug mit einer Sensoranordnung zur Erfassung eines auf die rotierenden Bauteile wirkenden Drehmomentes und
Figur 2 eine Teilschnittansicht der stirnseitigen Enden einer Innen- und Außenwelle des Lenkgetriebes mit einer zusätzlichen Erfassung voller Umdrehungen einer Lenkspindel.

### Beschreibung des Ausführungsbeispiels

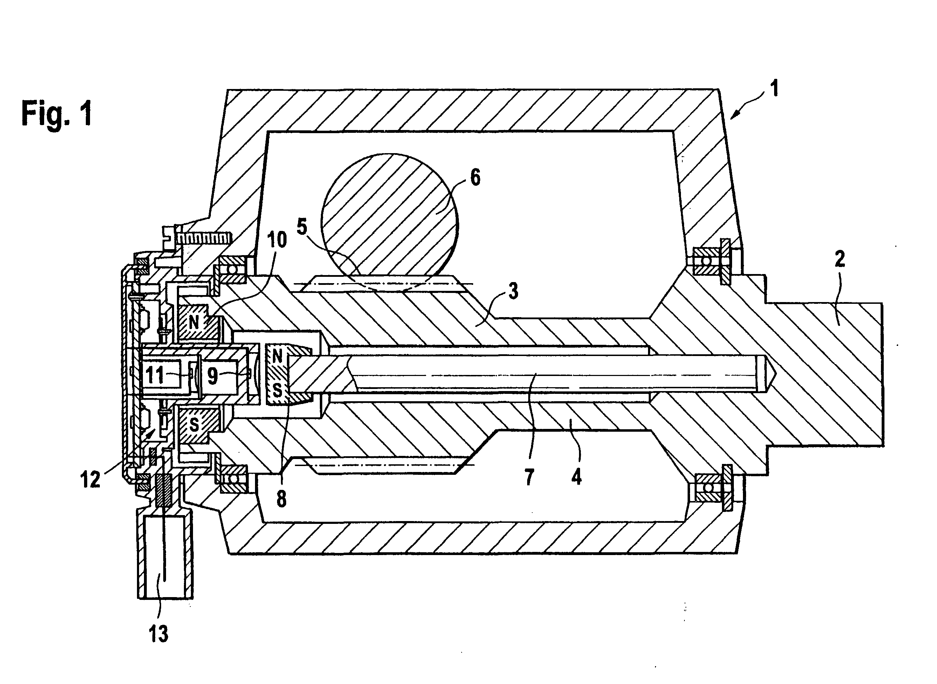

In Figur 1 ist in einer schematischen Ansicht ein Lenkgetriebe 1 gezeigt, das über ein drehbares Anschlussteil 2 mit einer drehmomentbehafteten Lenkbewegung beaufschlagt werden kann (Drehmomenteingang). Im Lenkgetriebe 1 ist eine Außenwelle 3 gebildet, die einen Torsionsbereich 4 aufweist und ein Anschlussteil 5 für eine Übertragung der Drehbewegung auf eine Spurstange 6 besitzt, wobei an diesem Anschlussteil das Drehmoment von der Lenkbewegung mit einem entsprechend ausgestalteten Getriebe weiter übertragen wird (Drehmomentausgang).

Es ist im Lenkgetriebe 1 nach der Figur 1 weiterhin eine Innenwelle 7 vorhanden, die fest am Anschlussteil 2 verankert ist (Drehmomenteingang). Am stirnseitigen Ende der Innenwelle 7 ist ein Magnet 8 vorhanden, in dessen radialen Magnetfeld ein magnetfeldempfindlicher Sensor 9, beispielsweise eine AMR-Sensor, angeordnet ist. Am stirnseitigen Wende der Außenwelle 3 ist ein Magnet 10 vorhanden, dessen radiales Magnetfeld von einem zweiten Sensor 11 detektiert wird.

Die Sensoren 9 und 11 sind an eine elektronische Auswerteschaltung 12 angeschlossen, in der die von der Richtung der Magnetfelder und damit von der Drehstellung abhängigen Signale der Sensoren 9 und 11 erfasst und zum Teil ausgewertet werden können. Auf die einzelnen Bauteile und deren Funktion in der Auswerteschaltung 12 braucht zum Verständnis der Erfindung hier nicht näher eingegangen werden. Die Ausgangssignale der Auswerteschaltung 12 werden über eine elektrische Steckverbindung 13 zum Anschluss an die Bordelektronik eines Kraftfahrzeuges zur Verfügung gestellt.

Bei einer auf das Lenkgetriebe 1 nach der Figur 1 ausgeübten Lenkbewegung wird durch Anlegen eines Drehmomentes an den Bereich der Außenwelle 3, der am Anschlussteil 2 liegt (Drehmomenteingang), und dem Bereich 5, der am anderen stirnseitigen Ende liegt (Drehmomentausgang), ein Verdrehwinkel (Torsionswinkel der Außenwelle) erzeugt. Der Magnet 10 der Außenwelle 3 wird dabei im gleichen Maße verdreht, wie der Bereich 5 der Außenwelle am sog. Drehmomentausgang. Die Innenwelle 7 und der Magnet 8 der Innenwelle 7 werden jedoch im gleichen Maße verdreht, wie der Bereich 2 der Außenwelle 3 am sog. Drehmomenteingang. Somit verdrehen sich die beiden Magnete 8 und 10 sowie deren Magnetfelder relativ zueinander und der entsprechende Verdrehwinkel kann detektiert werden. Dieser Verdrehwinkel der Magnetfelder am Ort der Magnetfeldmessung an den Sensoren 9 und 11 ist proportional zum Verdrehwinkel der Außenwelle 3 und damit zum Drehmoment.

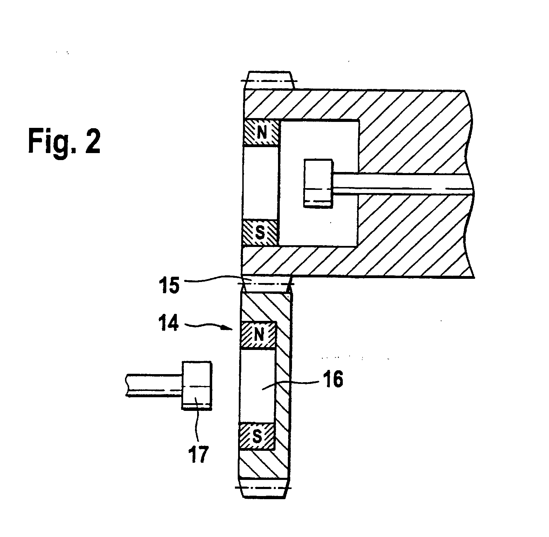

In Figur 2 ist eine Erweiterung des Lenkgetriebes 1 nach der Figur 1 mit dem zusätzlichen Antrieb eines rotierenden Bauteils 14 gezeigt. Über einen äußeren Zahnkranz 15 am stirnseitigen Ende der Außenwelle 3 und über einen entsprechenden Zahnkranz 15 am zusätzlichen Bauteil 14 wird hier eine Mitrotation eines dritten Magneten 16 bewirkt, die ebenfalls mittels eines magnetfeldempfindlichen Sensors 17 erfassbar ist. Das Messprinzip und die Auswertung entspricht dabei vorzugsweise der Arbeitsweise der Sensoren 9 und 11 aus der Figur 1. Mit dieser Anordnung nach der Figur 2 ist es möglich, beispielsweise durch eine unterschiedliche Zähnezahl der beiden Zahnkränze 15, eine eindeutige Erfassung und Zählung von vollen Umdrehungen der am Anschlussteil 2 angeschlossenen Lenkspindel durchzuführen.

## Patentansprüche

1. Sensoranordnung zur Erfassung des Drehwinkelsund/oder des Drehmoments an rotierenden mechanischen Bauteilen (3,7;14), mit
- Signalerzeugungselementen (8,10;16) und Signaldetektionselementen (9,11;17), wobei die Signalerzeugungselemente (8,10;16) jeweils an den bewegten mechanischen Bauteilen (3,7;14) befestigt sind, **dadurch gekennzeichnet, dass**
- am rotierenden Bauteil eine Torsionswelle als Außenwelle (3) gebildet ist, an dessen Bereich (2) an einem Ende ein Drehmoment angreift und im Bereich (5) des stirnseitigen anderen Endes das Drehmoment abnehmbar ist, wobei eine Innenwelle (7) konzentrisch zur Außenwelle (3) angeordnet ist, die mit ihrem einen Ende an der Außenwelle (3) im Bereich (2) des Eingangs des Drehmoments befestigt ist und dass
- an dem stirnseitigen Ende der Außenwelle (3) und der Innenwelle (7) die Signalerzeugungselemente (8,10) angeordnet sind, denen jeweils ein ortsfestes Signaldetektionselement (9,11;17) zugeordnet ist.

2. Sensoranordnung nach Anspruch 1 mit
- mindestens einem Magneten (8,10;16) als Signalerzeugungselemente und mindestens einem Sensor (9,11;17) als Signaldetektionselement (9,11;17), der ein von der Richtung der Feldlinien des Magneten (8,10;16) abhängiges elektrisches Ausgangssignal abgibt, **dadurch gekennzeichnet, dass**
- an dem stirnseitigen Ende der Außenwelle (3) und der Innenwelle (7) die Magnete (8,10) mit radial ausgerichteten Magnetfeldern angeordnet sind, denen jeweils ein ortsfester magnetfeldempfindlicher Sensor (9,11; 17), vorzugsweise auf der Wellenachse, zugeordnet ist.

3. Sensoranordnung nach Anspruch 2, **dadurch gekennzeichnet, dass**
- der eine Magnet (8) an der Innenwelle (7) zur Erfassung des Drehwinkels des Bereichs (2) am Eingang des Drehmoments ein radiales Magnetfeld erzeugt und der andere Magnet (10) an der Außenwelle (3) zur Erfassung des Drehwinkels im Bereich (5) des Ausgangs des Drehmoments außerhalb des ersten Magneten (8) angeordnet ist und ein weiteres radiales Magnetfeld erzeugt und dass
- unter Einwirkung des Drehmomentes die Verdrehung der Magnetfelder relativ zueinander messbar ist, wobei der Verdrehwinkel proportional zum Drehmoment ist.

4. Sensoranordnung nach einem der vorhergehenden Ansprüche, **dadurch gekennzeichnet, dass**
- am stirnseitigen Ende der Außenwelle (3) ein Antrieb (15) für ein weiteres rotierendes Bauteil (14) angebracht ist, mit dem Umdrehungen der Welle (3,7) größer als 360° erfassbar sind.

5. Sensoranordnung nach Anspruch 4, **dadurch gekennzeichnet, dass**
- die Erfassung der Drehung des weiteren Bauteils (14) ebenfalls mit einer magnetfeldempfindlichen Sensoranordnung (16,17) vornehmbar ist.

6. Sensoranordnung nach Anspruch 4 oder 5, **dadurch gekennzeichnet, dass**
- der Antrieb ein Zahnradantrieb (15) ist, bei dem die Zähnezahl auf dem Umfang des weiteren Bauteils (14) unterschiedlich zur Zähnezahl auf der Außenwelle (3) ist.

7. Sensoranordnung nach einem der vorhergehenden Ansprüche, d**adurch gekennzeichnet, dass**
- die Sensoren (9,11;17) magnetoresistive Sensoren sind, die derart im Magnetfeld der Magneten (8,10;16) angeordnet ist, dass deren magnetfeldempfindliche Schicht tangential zu der die Winkeländerung verursachenden Drehung der Wellen (3,7;14) liegt.

8. Sensoranordnung nach Anspruch 7, **dadurch gekennzeichnet, dass**
- die Sensoren (9,10;17) magnetoresistive AMR- oder GMR-Sensoren sind, die ein im wesentlichen von der Feldlinienrichtung der mit den drehbaren Wellen (3,7;14) verbundenen Magnete (8,10;16) abhängiges Signal abgeben und dass
- in einer Auswerteschaltung (12) aus diesen Signalen jeweils der absolute Drehwinkel der Innen- und der Außenwelle (3,7) und aus dem relativen Verdrehwinkel das einwirkende Drehmoment ermittelbar ist.

9. Sensoranordnung nach einem der vorhergehenden Ansprüche, **dadurch gekennzeichnet, dass**
- die Innen- und die Außenwelle (3,7) an der Lenkspindel eines Kraftfahrzeuges angebracht sind.

10. Sensoranordnung nach einem der vorhergehenden Ansprüche, **dadurch gekennzeichnet, dass**
- die Innen- und die Außenwelle (3,7) in die Achse eines Motors integriert sind.

## Claims

1. Sensor arrangement for detecting the angle of rotation and/or the torque of rotating mechanical components (3, 7; 14), having
- signal-generating elements (8, 10; 16) and signal-detection elements (9, 11; 17), wherein the signal-generating elements (8, 10; 16) are each attached to the moved mechanical components (3, 7; 14), **characterized in that**
- a torsion shaft is formed as an external shaft (3) on the rotating component, at whose region (2) at one end a torque acts and in the region (5) of the other end the torque can be tapped, an internal shaft (7) being arranged concentrically with respect to the external shaft (3) and being attached by one of its ends to the external shaft (3) in the region (2) of the input of the torque, and **in that**
- the signal-generating elements (8, 10) are arranged on the end of the external shaft (3) and the internal shaft (7) and each have one associated fixed signal-detection element (9, 11; 17).

2. Sensor arrangement according to Claim 1, having
- at least one magnet (8, 10; 16) as signal-generating elements and at least one sensor (9, 11; 17) as a signal-detection element (9, 11; 17), which sensor (9, 11; 17) outputs an electrical output signal which is dependent on the direction of the field lines of the magnet (8, 10; 16), **characterized in that**
- the magnets (8, 10) are arranged on the end of the external shaft (3) and of the internal shaft (7) and have radially oriented magnetic fields which each have an associated fixed magnetic-field-sensitive sensor (9, 11; 17), preferably on the axis of the shaft.

3. Sensor arrangement according to Claim 2, **characterized in that**
- the one magnet (8) on the internal shaft (7) generates a radial magnetic field in order to detect the angle of rotation of the region (2) at the input of the torque, and the other magnet (10) is arranged on the external shaft (3) in order to detect the angle of rotation in the region (5) of the output of the torque outside the first magnet (8), and generates a further radial magnetic field, and **in that**
- the rotation of the magnetic fields with respect to one another can be measured under the effect of the torque, the angle of rotation being proportional to the torque.

4. Sensor arrangement according to one of the preceding claims, **characterized in that**
- a drive (15) for a further rotating component (14) with which rotations of the shaft (3, 7) greater than 360° can be detected is mounted on the end of the external shaft (3).

5. Sensor arrangement according to Claim 4, **characterized in that**
- the rotation of the further component (14) can also be detected using a magnetic-field-sensitive sensor arrangement (16, 17).

6. Sensor arrangement according to Claim 4 or 5,
**characterized in that**
- the drive is a gear wheel drive (15) in which the number of teeth on the circumference of the further component (14) is different from the number of teeth on the external shaft (3).

7. Sensor arrangement according to one of the preceding claims, **characterized in that**
- the sensors (9, 11; 17) are magneto-resistive sensors which are arranged in the magnetic field of the magnets (8, 10; 16) in such a way that their magnetic-field-sensitive layer is tangential to the rotation of the shafts (3, 7; 14) which causes the change in angle.

8. Sensor arrangement according to Claim 7, **characterized in that**
- the sensors (9, 10; 17) are magneto-resistive AMR or GMR sensors which output a signal which is dependent essentially on the direction of the field lines of the magnets (8, 10; 16) which are connected to the rotatable shafts (3, 7; 14), and **in that**
- in an evaluation circuit (12) the absolute angle of rotation of the internal shaft (7) and of the external shaft (3) can be respectively determined from these signals, and the torque which is acting can be determined from the relative angle of rotation.

9. Sensor arrangement according to one of the preceding claims, **characterized in that**
- the internal shaft (7) and the external shaft (3) are mounted on the steering shaft of a motor vehicle.

10. Sensor arrangement according to one of the preceding claims, **characterized in that**
- the internal shaft (7) and the external shaft (3) are integrated into the axle of an engine.

## Revendications

1. Dispositif de mesure destiné à la détection de l'angle et/ou du couple de rotation sur des pièces mécaniques pivotantes (3, 7, 14) doté d'éléments de production de signaux (8, 10, 16) et d'éléments de détection de signaux (9, 11, 17), les éléments de production de signaux (8, 10, 16) étant fixés respectivement aux pièces mécaniques déplacées (3 7 14),
**caractérisé en ce qu'**
- un arbre de torsion est formé comme arbre extérieur (3) sur la pièce pivotante, un couple de rotation exercé sur la zone (2) à une extrémité peut être récupéré dans la zone (5) de l'autre extrémité du côté frontal, avec un arbre intérieur (7) concentrique par rapport à l'arbre extérieur (3) et fixé par l'une de ses extrémités à l'arbre extérieur (3) dans la zone (2) de l'entrée du couple de rotation,
- et les éléments de production de signaux (8, 10) sont disposés à l'extrémité du côté frontal de l'arbre extérieur (3) et de l'arbre intérieur (7), et aux éléments est associé un élément de détection de signaux (9, 11, 17) fixe.

2. Dispositif de mesure selon la revendication 1, doté
- d'au moins un aimant (8, 10, 16) comme élément de production de signaux et d'au moins un capteur (9, 11, 17) comme élément de détection de signaux (9, 11, 17), qui émet un signal de sortie électrique dépendant du sens des lignes de champ de l'aimant (8, 10, 16),
**caractérisé en ce que**
- les aimants (8, 10) avec des champs magnétiques orientés radialement sont disposés à l'extrémité du côté frontal de l'arbre extérieur (3) et de l'arbre intérieur (7), et à chaque aimant est associé respectivement un capteur fixe sensible aux champs magnétiques (9, 11, 17), de préférence sur l'axe d'arbre.

3. Dispositif de mesure selon la revendication 2,
**caractérisé en ce que**
- l'aimant (8) sur l'arbre intérieur (7) crée un champ magnétique radial pour détecter l'angle de rotation de la zone (2) à l'entrée du couple de rotation, et l'autre aimant (10) sur l'arbre extérieur (3) pour détecter l'angle de rotation dans la zone (5) de la sortie du couple de rotation est disposé en dehors du premier aimant (8) et crée un autre champ magnétique radial, et
- la torsion des champs magnétiques l'un par rapport à l'autre est mesurable sous l'effet du couple de rotation, l'angle de torsion étant proportionnel au couple de rotation.

4. Dispositif de mesure selon l'une quelconque des revendications précédentes,
**caractérisé en ce qu'**
- un entraînement (15) est appliqué à l'extrémité du côté frontal de l'arbre extérieur (3) pour une autre pièce pivotante (14), qui permet de détecter des rotations de l'arbre (3, 7) supérieures à 360°.

5. Dispositif de mesure selon la revendication 4,
**caractérisé en ce que**
- la détection de la rotation de l'autre pièce (14) peut également être réalisée avec un dispositif de mesure (16, 17) sensible aux champs magnétiques.

6. Dispositif de mesure selon la revendication 4 ou 5,
**caractérisé en ce que**
- l'entraînement est une commande par engrenage (15), dont le nombre de dents sur le pourtour de l'autre pièce (14) est différent du nombre de dents sur l'arbre extérieur (3).

7. Dispositif de mesure selon l'une quelconque des revendications précédentes,
**caractérisé en ce que**
- les capteurs (9, 11, 17) sont des capteurs magnétorésistifs, disposés dans le champ magnétique des aimants (8, 10, 16) pour que leur couche sensible aux champs magnétiques soit tangentielle à la rotation des arbres (3, 7, 14) à l'origine de la modification de l'angle.

8. Dispositif de mesure selon la revendication 7,
**caractérisé en ce que**
- les capteurs (9, 11, 17) sont des capteurs magnétorésistifs AMR ou GMR qui émettent un signal dépendant essentiellement du sens de la ligne de champ des aimants (8, 10, 16) reliés aux arbres pivotants (3, 7, 14), et
- un circuit d'exploitation (12) détermine l'angle de rotation absolu de l'arbre intérieur et de l'arbre extérieur (3, 7) à partir de ces signaux, et le couple de rotation effectif à partir de l'angle de torsion relatif.

9. Dispositif de mesure selon l'une quelconque des revendications précédentes,
**caractérisé en ce que**
- les arbres intérieur et extérieur (3, 7) sont appliqués sur l'arbre de direction d'un véhicule automobile.

10. Dispositif de mesure selon l'une quelconque des revendications précédentes,
**caractérisé en ce que**
- les arbres intérieur et extérieur (3, 7) sont intégrés dans l'axe d'un moteur.
